# EUROPÄISCHE PATENTANMELDUNG

(11) **EP 1 403 441 A1**
(43) Veröffentlichungstag der Anmeldung: **31.03.2004**
(21) Anmeldenummer: 03019088.8
(22) Anmeldetag: 22.08.2003
(51) Int. Cl.: E04B 2/70, E04B 1/26

(54) **Gebäudetrennwand in Holzbauweise**

(30) Priorität: 18.09.2002 DE 10243348
(71) Anmelder: Merk-Holzbau GmbH & Co KG, 86551 Aichach (DE)
(72) Erfinder: Moser, Karl, 86551 Aichach (DE)
(74) Vertreter: Liska, Horst, Dr.-Ing.

(57) **Zusammenfassung**

Es wird eine Gebäudetrennwand in Holzbauweise vorgeschlagen. Die Gebäudetrennwand hat zwei im Abstand voneinander vertikal angeordnete Verbundwandplatten (1), von denen jede eine Tragplatte (3) aus Holz oder/und einem Holzwerkstoff umfasst und jede Tragplatte (3) auf ihrer zur anderen Tragplatte (3) gelegenen Flachseite mit einer Schutzplatte (9) aus feuerhemmendem oder nicht brennbarem Material flächig bekleidet ist. Jede Tragplatte (3) ist als Schichtstapel aus mehreren jeweils flächig miteinander verklebten Schichten (5) ausgebildet, von denen wenigstens drei Schichten als Brettholzschicht oder/und Holzspanplatte ausgebildet sind. Eine solche Gebäudetrennwand hat insbesondere bei tiefen Frequenzen von weniger als 50 Hz verbesserte Werte der Schalldurchgangsdämpfung. Darüber hinaus kann eine solche Gebäudetrennwand mit Hilfe temporärer Abstandhalter (15, 17, 23) sowie temporärer Befestigungsmittel (37, 41) zu einer als solcher transportablen Baueinheit temporär vereinigt werden, was die Montage der Gebäudetrennwand erleichtert.

## Beschreibung

Die Erfindung betrifft eine Gebäudetrennwand in Holzbauweise.

Gebäudetrennwände zwischen aneinandergrenzenden Gebäuden, beispielsweise Reihenhäusern, müssen so aufgebaut sein, dass sie die Standfestigkeit der Wand auch dann gewährleisten, wenn das Nachbargebäude entfernt wird. Die Gebäudetrennwand muss darüber hinaus vorgeschriebene Brandschutzauflagen, beispielsweise eine Feuerwiderstandsfähigkeit der Klasse F90 erfüllen. Diese Vorschriften lassen sich mit herkömmlichen Methoden erfüllen. Problematisch bei herkömmlichen Gebäudetrennwänden in Holzbauweise sind jedoch die Schallschutzanforderungen. So müssen z.B. in Deutschland bei erhöhten Schallschutzanforderungen Schalldurchgangsdämpfungswerte für doppelschalige Wände von 67 dB erreicht werden. Diese Werte lassen sich in Holzbauweise nur sehr schwer erreichen, insbesondere wenn die Gebäudetrennwand aus Platzgründen insgesamt nicht zu dick bemessen werden soll.

Herkömmliche Gebäudetrennwände werden vielfach in ausgefachter Holzrahmenbauweise ausgeführt. Aus "Schweizer Holzzeitung" Nr. 16, Seiten 20 bis 22, vom 18.04.2002 ist andererseits eine Gebäudetrennwand aus zwei im Abstand voneinander vertikal angeordneten Verbundwandplatten bekannt, von denen jede eine Tragplatte aus einer in ihrer Dicke integral gefertigten Holzspanplatte umfasst. Jede Tragplatte ist auf ihrer zur anderen Tragplatte gelegenen Flachseite mit einer feuerhemmenden Gipsplatte bekleidet und in den Hohlraum zwischen den beiden Verbundwandplatten ist eine Hohlraumdämmung aus Steinwolle oder Weichfasermaterial eingebaut. Der Schalldurchgangsdämpfungswert dieser Gebäudetrennwand wurde mit 73 dB gemessen.

Es hat sich herausgestellt, dass das subjektive Empfinden des durch die Gebäudetrennwand hindurchtretenden Schalls nicht allein durch den Schalldurchgangsdämpfungswert beschrieben werden kann. Es hat sich insbesonders herausgestellt, dass mangelhafte Schalldurchgangsdämpfung bei tiefen Frequenzen von den Gebäudebewohnern als störend empfunden werden, selbst wenn die Gebäudetrennwand bei hohen Frequenzen hinreichend gute Schalldurchgangsdämpfungswerte hat.

Es ist Aufgabe der Erfindung, eine Gebäudetrennwand in Holzbauweise anzugeben, die auch bei tiefen Frequenzen hinreichend gute bis sehr gute Schalldurchgangsdämpfungswerte erreicht.

Die Erfindung geht aus von einer Gebäudetrennwand in Holzbauweise mit zwei im Abstand voneinander vertikal angeordneten Verbundwandplatten, von denen jede eine Tragplatte aus Holz oder/und einem Holzwerkstoff umfasst und jede Tragplatte auf ihrer zur anderen Tragplatte gelegenen Flachseite mit einer Brandschutzplatte aus feuerhemmendem oder auch nicht brennbarem Material flächig bekleidet ist.

Überraschenderweise hat sich gezeigt, dass der Schalldurchgangsdämpfungswert bei niedrigen Frequenzen beträchtlich verbessert werden kann, wenn jede Tragplatte als Schichtstapel aus mehreren, jeweils flächig miteinander verklebten Schichten ausgebildet ist, von denen wenigstens drei Schichten jeweils für sich als Brettholzschicht oder/und Holzspanplatte ausgebildet sind. Diese Konstruktionsweise, angewandt auf die miteinander nicht verbundenen und damit entkoppelten Verbundwandplatten, erlaubt es, das Flächengewicht der Tragplatten zu erhöhen und damit die Resonanzfrequenz der Doppelwandkonstruktion in einem Bereich von 50 Hz oder weniger zu verschieben. Es lassen sich Resonanzfrequenzwerte von gegebenenfalls 30 Hz erreichen. Da die Tragplatten aus mehreren Schichten aufgebaut sind, lässt sich, verglichen mit einer in ihrer Dicke integralen Holzwerkstoffplatte ein höheres Flächengewicht erreichen.

Vorzugsweise soll das Flächengewicht der Tragplatte wenigstens 38 kg/m², insbesondere 45 kg/m², betragen. Eine solche Gebäudetrennwand erfüllt nicht nur die Anforderungen an die Stabilität und den Brandschutz, sondern auch die Schallschutzanforderungen selbst bei tiefen Frequenzen. Die Dicke der Gebäudetrennwand ist darüber hinaus relativ gering, da sie mit einem Abstand der Verbundwandplatten zwischen 50 und 100 mm bei einer Dicke der Verbundwandplatten in der Größenordnung von ca. 80 mm auskommt.

Die Tragplatten können als Brettschichtholzplatten ausgebildet sein, wie sie beispielsweise in DE 196 04 433 A und DE 100 30 457 A beschrieben sind. Speziell geeignet sind Tragplatten, bei welchen eine oder mehrere Schichten als Holzspanplatten auch mit gleichsinnig faserorientierten Holzspänen, insbesondere langen Holzspänen, (OSB-Holzspanplatten) ausgebildet sind, da solche Holzspanplatten hinreichende Festigkeit mit hohem Flächengewicht verbinden. Es versteht sich, dass die Tragplatte auch kombiniert aus Brettholzschichten und Holzspanplatten aufgebaut sein kann. Die Faserorientierung einer Teilanzahl der Schichten der Tragplatte verläuft zweckmäßigerweise quer zur Faserrichtung der übrigen Schichten der Tragplatte, um das Quellen der Tragplatte zu behindern und ggf. die Biegeeigenschaften zu verbessern. Es versteht sich, dass die Tragplatte auch zusätzliche, nicht tragende, jedoch die Biegeeigenschaften beeinflussende Schichten enthalten kann, wie dies beispielsweise in DE 100 30 457 A beschrieben ist.

Die Tragplatten werden bevorzugt in großen Formaten hergestellt, beispielsweise bis zu 4,80 m auf 15 m, so dass sie sich über die gesamte Gebäudebreite oder/und die gesamte Gebäudehöhe einteilig erstrecken. Große Formate dieser Art lassen sich unter Vakuum verleimen, wie dies in DE 196 04 433 oder DE 44 27 365 A beschrieben ist.

Da aufgrund des Aufbaus der Tragplatte aus mehreren Spanplatten oder Brettern Stoßfugen innerhalb der einzelnen Schichten unvermeidbar sind, werden solche Stoßfugen in benachbarten Schichten längs der Tragplatte gegeneinander versetzt. Bei Verwendung von Holzspanplatten werden zweckmäßigerweise drei Schichten vorgesehen, bei Brettholzschichten zweckmäßigerweise fünf Schichten. In entsprechender Weise besteht die Brandschutzplatte gleichfalls aus einem Stapel aus wenigstens zwei Mineralwerkstoffplatten, insbesondere faserbewehrten Gipsplatten, um auch hier Stoßfugen gegeneinander versetzen zu können.

In einer bevorzugten Ausgestaltung sind die Tragplatten auf ihrer der anderen Tragplatte abgewandten Flachseite mit einer Sichtplatte, insbesondere einer Mineralwerkstoffplatte, beispielsweise einer Gipskartonplatte oder dergleichen, bekleidet. Platten dieser Art erhöhen das Gesamtflächengewicht der Verbundwandplatte und verbessern so nicht nur die Oberflächenbeschaffenheit, sondernauchdenSchalldurchgangsdämpfungswert.

An die Verbundwandplatten müssen insbesondere im mehrgeschoßigen Gebäudebau Deckenkonstruktionen angeschlossen werden. Herkömmlich werden hierzu an der Gebäudeinnenseite der Verbundwandplatte Auflager seitlich angebracht, die jedoch aufgrund ihrer seitlichen Anbringung die Verbundwandplatte auf Biegung beanspruchen. Bevorzugt ist deshalb, dass die Tragplatte wenigstens eine von der zur anderen Tragplatte abgewandten Flachseite her bis über die Plattenmitte hinaus in die Tragplatte eingreifende Aussparung hat, in der ein Deckenauflager im Wesentlichen symmetrisch zur Plattenmitte abgestützt ist. Die an sich unerwünschte Biegebelastung der Tragplatte wird auf diese Weise vermieden. Die vorstehend erläutert Idee der mittigen Auflagerung eines Deckenauflagers in einer Aussparung einer Wand-/Tragplatte kann auch bei sonstigen, einschaligen Gebäudewänden in Holzplattenbauweise mit Vorteil angewandt werden. Die Idee hat selbständige erfinderische Bedeutung.

Zweckmäßigerweise ist die Aussparung als zur anderen Flachseite der Tragplatte hin geschlossene Sackaussparung ausgebildet und unterbricht damit nicht die brandschutztechnisch günstige geschlossene Außenfläche der Verbundwandplatte.

Um den in der Aussparung sich befindenden, zur anderen Tragplatte hinweisenden Querschnitt des in der Regel aus Metall bestehenden Deckenauflagers und damit dessen wärmeaufnehmende Fläche möglichst kein zu halten, ist der Deckenauflager bevorzugt als vertikal verlaufendes, im Bereich seines in der Aussparung gelegenen Endes mit einer horizontal verlaufenden Auflagerplatte versehenes Auflagerschwert ausgebildet. Ein solches Auflagerschwert hat bei hoher Belastbarkeit einen vergleichsweise kleinen Wärmeleitquerschnitt. Bevorzugt ist auch die Aussparung als T-förmiger Schlitz ausgebildet, so dass die Tragplatte zugleich als Wärmeisolierung der Auflagerplatte und des Auflagerschwerts dient.

Beim Aufbauen herkömmlicher Gebäudetrennwände in Holzbauweise ist es üblich, die Verbundwandplatten nacheinander an dem Gebäudebauplatz aufzustellen. Hierbei muss der Abdichtung des Abstandspalts zwischen den Verbundwandplatten erhöhte Aufmerksamkeit geschenkt werden, da in den Abstandspalt hineinfallende Baustoffreste oder dergleichen nachträglich nicht mehr behebbare Schallbrücken bilden. Nicht zuletzt aus diesem Grund ist es üblich, die zuerst aufgebaute Verbundwandplatte auch mit einer den Abstandspalt zumindest teilweise, vorzugsweise jedoch ganz ausfüllenden Schicht aus Mineralwollmatten zu bekleiden. Der sequentielle Aufbau der Gebäudetrennwand erhöht jedoch die Baukosten.

In einer bevorzugten Ausgestaltung der erfindungsgemäßen Gebäudetrennwand ist vorgesehen, dass die Verbundwandplatten mit Hilfe temporär anbringbarer Befestigungsmittel oder/und temporär anbringbarer Abstandhalter zu einer als solcher transportablen Baueinheit temporär vereinigt werden. Die Gebäudetrennwand kann damit vorgefertigt oder auch am Bauplatz, jedoch noch nicht an der im Gebäude bestimmten Stelle komplett aufgebaut werden und dann ähnlich einer normalen, einschaligen Gebäudewand, eingebaut werden. Der Aufbau und der Einbau der Gebäudetrennwand wird auf diese Weise beträchtlich erleichtert. Es versteht sich, dass die in eine solche Baueinheit verbauten Verbundwandplatten auch anders ausgestaltet sein können als vorangegangen erläutert. Die Idee hat deshalb selbständige erfinderische Bedeutung.

Als Befestigungsmittel können an den Verbundwandplatten der Baueinheit, insbesondere an deren Rändern, die Verbundwandplatten fest miteinander verbindende Schubverblockungselemente abnehmbar befestigt sein. Die Schubverblockungselemente verhindern, dass sich die beiden Verbundwandplatten während des Transports der Baueinheit längs ihrer Ebenen zueinander verschieben.

An den Verbundwandplatten können gemeinsam angreifende Anhebehalter abnehmbar befestigt sein. Die Anhebehalter können beispielsweise als in Bohrungen beider Verbundwandplatten sitzende Stahlstäbe ausgebildet sein. Diese Stahlstäbe können mit Kranhakenangriffsmitteln versehen sein und gegebenenfalls mit den Schubverblockungselementen verbunden sein.

Bei den Verbundwandplatten handelt es sich in der Regel um relativ großflächige und damit schwere Bauteile. Dennoch muss sichergestellt sein, dass die beiden Verbundwandplatten in einem definierten Abstand zur Baueinheit zusammengefügt werden und dieser Abstand während des Transports eingehalten werden kann. Um dies zu bewerkstelligen, ist in einer bevorzugten Ausgestaltung vorgesehen, dass die einander zugewandten Flachseiten der Verbundwandplatten Auflagerplatten mit zueinander ausgerichteten Gewindelöchern zur temporären Aufnahme einer durch zumindest eine der Verbundwandplatten hindurchtretenden Abstandhalter-Gewindestande tragen. Auf das aus der Verbundwandplatte austretende Ende der Abstandhalter-Gewindestange ist ein Widerlager aufgeschraubt, so dass die beiden Verbundwandplatten in korrektem Abstand relativ zueinander fixiert werden können. Die in dem Abstandspalt an den einander zugewandten Flachseiten der Verbundwandplatten vorgesehenen Auflagerplatten sind an diesen Flachseiten befestigt und verbleiben in dem Abstandspalt. Da die Abstandhalter-Gewindestangen nach dem Einbau der Gebäudetrennwand herausgeschraubt werden, werden Schallbrücken vermieden. Von Vorteil ist, dass derartige Abstandhalter nicht nur im Bereich der Ränder der Verbundwandplatten vorgesehen werden können, sondern auch in deren Mittenbereich, der nach dem Aufstellen der Gebäudetrennwand in der Regel nur noch schwer zugänglich ist.

Die dem Widerlager gegenüberliegend an der von der Abstandhalter-Gewindestange durchsetzten Verbundwandplatte angeordnete Auflagerplatte ist bevorzugt mit bei Auflagedruck selbst verbindenden Befestigungsmitteln an der Verbundwandplatte befestigt. Dies hat den Vorteil, dass beim Zusammenbau der Baueinheit die bereits auf die Abstandhalter-Gewindestange aufgeschraubten Auflagerplatten auf den korrekten Abstand eingestellt werden können, bevor dann die Verbundwandplatten zusammengeführt und mit dem Widerlager druckverschraubt werden. Bei den durch Auflagedruck selbstverbindenden Befestigungsmitteln kann es sich um Einpressdorne oder Nägel an der Auflagerplatte handeln oder die Auflagerplatte wird mit einem zeitverzögert abbindenden Klebstoff an der Verbundwandplatte angeklebt.

Die vorstehend erläuterten temporär mit den Verbundwandplatten zu verbindenden Befestigungsmittel und Abstandhalter werden bevorzugt bei einem Montageverfahren eingesetzt, bei welchem die Verbundwandplatten mit einander zugewandten Schutzplatten bei gleichzeitiger Abstützung über die temporär anbringbaren Abstandhalter horizontal liegend übereinandergelegt und dann mit Hilfe temporär anbringbarer Befestigungsmittel zu einer als solcher transportablen Baueinheit temporär vereinigt. Die zur Baueinheit vereinigten Verbundwandplatten werden dann am Gebäudeaufstellort vertikal stehend aufgestellt, bevor dann die Abstandhalter und Befestigungsmittel entfernt werden. Die horizontal liegende Montage der Verbundwandplatten erleichtert die Montage und verhindert, dass bereits während der Montage Schallbrücken bildende Baustoffreste in den Abstandspalt fallen und sich dort verklemmen. Das Montageverfahren lässt sich bevorzugt mit den vorstehend erläuterten Verbundwandplatten, Befestigungsmitteln und Abstandhaltern durchführen, ist aber auch bei anders aufgebauten, insbesondere herkömmlichen Verbundwandplatten, Befestigungsmitteln und Abstandhaltern mit Vorteil einsetzbar.

Im Folgenden wird die Erfindung anhand einer Zeichnung näher erläutert. Hierbei zeigt:
Fig. 1 einen Querschnitt durch eine erfindungsgemäße, zu einer temporären Baueinheit vereinigte Gebäudetrennwand in Holzbauweise vor dem Einbau in ein Gebäude;
Fig. 2 die Gebäudetrennwand nach dem Einbau in das Gebäude mit bereits montierter Deckenkonstruktion;
Fig. 3 einen Querschnitt durch einen Deckenauflager, gesehen entlang einer Linie III-III in Fig. 2 und
Fig. 4 einen Querschnitt durch die bereits aufgestellte Gebäudetrennwand mit einer Variante des Deckenauflagers.

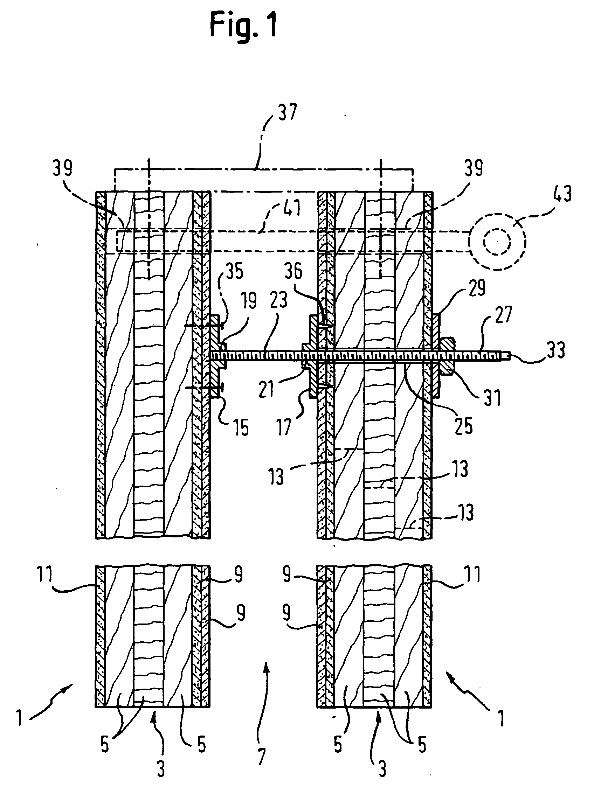

Fig. 1 zeigt eine in Holzbauweise ausgeführte Gebäudetrennwand mit zwei im Abstand voneinander angeordneten Verbundwandplatten 1, von denen jede eine allgemein mit 3 bezeichnete Tragplatte aus Holz oder/und einem Holzwerkstoff umfasst. Jede der Tragplatten 3 ist als Schichtstapel aus mehreren jeweils flächig miteinander verklebten Schichten 5 ausgebildet, von denen wenigstens drei Schichten 5 als Holzspanplatten mit orientierten Langspänen (OSB-Platten) ausgebildet sind. Anstelle der Holzspanplatten können auch Brettholzschichten eingesetzt werden, wie sie beispielsweise in DE 196 04 433 A oder DE 100 30 457 A beschrieben sind. Bei der Verwendung von Brettholzschichten werden zweckmäßigerweise mehr als drei, beispielsweise fünf Schichten eingesetzt.

Die beiden Verbundwandplatten begrenzen zwischen sich einen Abstandspalt 7 vorbestimmter Breite. Ihre Tragplatten 3 sind auf ihren zum Abstandspalt 7 benachbarten Seiten mit einem Stapel aus wenigstens zwei - in Sonderfällen auch eine, mit speziellem Aufbau - aus feuerhemmendem oder nicht brennbarem Material bestehenden Brandschutzplatten 9 bekleidet, z.B. flächig beklebt. Die Brandschutzplatten 9 bestehen vorzugsweise aus einem feuerhemmenden Mineralmaterial und sind zweckmäßigerweise als faserverstärkte Gipsplatten ausgebildet. Auf ihren voneinander wegweisenden Flachseiten sind die Tragplatten 3 mit Sichtverkleidungsplatten 11 verkleidet, beispielsweise verklebt. Auch bei den Sichtverkleidungsplatten 11 handelt es sich, ähnlich wie bei den Feuerschutzplatten 9, um Materialplatten hohen Flächengewichts, insbesondere um Gipskartonplatten.

Die Tragplatte 3 jeder der Verbundwandplatten 1 ist statisch hoch belastbar und biegesteif. Gegebenenfalls können in die als Schichtstapel ausgebildete Tragplatte 3 noch zusätzliche, versteifende Schichten eingebaut sein, wie dies in DE 100 30 457 A beschrieben ist. Vorzugsweise sind ein Teil der Schichten 5 mit ihrer Faserorientierung quer zur Faserorientierung der übrigen Schichten 5 jeder Tragplatte 3 eingebaut. Beispielsweise verlaufen im Ausführungsbeispiel der Fig. 1 die Fasern der mittleren Schicht 5 horizontal, während die Fasern der beiden äußeren Schichten 5 vertikal verlaufen.

Die Verbundwandplatten sind über die gesamte Gebäudebreite oder/und über die gesamte Gebäudehöhe als einteilige Platten ausgebildet und können deshalb vergleichsweise große Abmessungen von beispielsweise 4 auf 15 m haben. In den einzelnen Schichten können die Abmessungen geringer sein, wobei jedoch, wie in Fig. 1 bei 13 angedeutet, die Stöße der einzelnen Bereiche in den Schichten 5 längs der Tragplatte 3 versetzt sind.

Entsprechendes gilt für die aus Brandschutzplatten 9 aufgebaute Bekleidung, um im Brandfall durchgehende Spalte dieser Bekleidung zu vermeiden.

Es hat sich überraschenderweise gezeigt, dass die anhand von Fig. 1 erläuterte Gebäudetrennwand eine sehr niedrige Eigenfrequenz von weniger als 50 Hz, vielfach weniger als 40 Hz hat und damit den subjektiv besonders störenden Durchgangschall bei niedrigen Frequenzen gut dämpft, insbesondere wenn das Flächengewicht der Tragplatten 3 größer als 38 kg/m², vorzugsweise größer 45 kg/m², ist. Hohe Flächengewichte lassen sich insbesondere bei Verwendung mehrere bezogen auf die Wanddicke dünner und damit sehr hoch verdichtbarer Holzspanplatten aus orientierten Langspänen (OSB-Platten) erreichen. Trotz der hohen Schalldämmungswerte bei tiefen Frequenzen kann die Gebäudetrennwand mit geringen Wanddickenabmessungen aufgebaut werden. Die Tragplatten 3 können beispielsweise eine Dicke von 84 mm, die Brandschutzbekleidung zum Abstandspalt 7 hin eine Dicke von etwa 30 mm haben. Der Abstandspalt selbst kann eine Dicke zwischen 50 und 100 mm haben und kann als Luftraum ausgebildet sein. Es versteht sich, dass er jedoch zumindest teilweise auch mit einer Mineralwollmatte ausgefüllt sein kann.

Im dargestellten Ausführungsbeispiel der Fig. 1 sind die beiden Verbundwandplatten 1 zu einer für sich transportablen Baueinheit temporär verbunden. Die Baueinheit kann damit gesondert vom Aufstellungsort der Gebäudetrennwand aufgebaut und justiert und als Baueinheit am Gebäudebauplatz aufgestellt werden, bevor Verbindungselemente, die die beiden Verbundwandplatten 1 aneinander halten, zum Vermeiden von Schallbrücken entfernt werden.

An den zum Abstandspalt 7 gelegenen Flachseiten der Verbundwandplatten 1 sind Auflagerplatten 15, 17 mit zueinander fluchtenden Gewindelöchern 19, 21 befestigt, in die als Abstandhalter eine Gewindestange 23 geschraubt ist. Die Gewindestange 23 durchsetzt in einem Bohrungsloch 25 eine der Verbundwandplatten 1 und trägt auf ihrem dem Abstandspalt 7 dieser Verbundwandplatte 1 abgewandten, austretenden Ende 27 eine Widerlagerplatte 29, die von einer auf das Ende 27 aufgeschraubten Mutter 31 gegen die dem Abstandspalt 7 abgewandte Flachseite der Verbundwandplatte 1 gedrückt wird. Das Ende 27 der Gewindestange 23 ist mit einer das Auffädeln der Elemente erleichternden, verjüngten Werkzeugangriffsfläche 33 versehen.

Die Auflagerplatte 15 ist, wie bei 35 angedeutet, an der Verbundwandplatte 1 angeschraubt oder sonstwie dauerhaft befestigt, beispielsweise angeklebt. Die der Widerlagerplatte 29 benachbarte Auflagerplatte 17 hingegen ist mit Hilfe bei Auflagedruck selbst verbindenden Befestigungsmitteln, hier von der Auflagerplatte 17 abstehenden Dornen 37 an der zugeordneten Verbundwandplatte 1 dauerhaft befestigt. Wie nachfolgend noch deutlich wird, kann es sich bei diesen selbstverbindenden Befestigungsmitteln auch um zeitverzögert abbindenden Klebstoff oder dergleichen handeln. Wenngleich in Fig. 1 lediglich ein derartiger Abstandhalter dargestellt ist, können über die Gebäudetrennwand mehrere solcher Abstandhalter verteilt angeordnet sein. Insbesondere können auch im Mittelbereich der Verbundwandplatten Abstandhalter dieser Art angeordnet werden, da die Gewindestange 23 nach dem Aufstellen der Gebäudetrennwand von der Seite ihres Endes 27 her herausgeschraubt werden kann. Die Auflagerplatten 15, 17 verbleiben in dem Abstandspalt 7. Die Bohrung 25 kann nachträglich verschlossen werden.

Die zu der Baueinheit zusammengefassten Verbundwandplatten 1 tragen an ihren Rändern Schubverblockungselemente 37, z.B. Holzplatten oder Metallplatten, die lösbar an den Rändern der Verbundwandplatten 1 befestigt, beispielsweise angeschraubt sind. In zueinander fluchtenden Bohrungen 39 beider Verbundwandplatten 1 sitzen lösbar befestigt Anhebeelemente 41, hier in Form axial lösbar fixierter Metallstangen 41, die das Anhängen der Baueinheit an einem Kran oder dergleichen erlauben. Beispielsweise können an den Stangen 41 Dollen 43 vorgesehen sein.

### Die Montage der Baueinheit erfolgt wie folgt:

Eine der beiden Verbundwandplatten 1, hier die in Fig. 1 linke Platte, wird horizontal mit ihrer zum Abstandspalt 7 gelegenen Flachseite nach oben aufgelegt. Sodann werden die Auflagerplatten 15 in der erforderlichen Anzahl auf der oberen Flachseite angebracht und die Gewindestangen 23 einschließlich der Auflagerplatten 17 eingeschraubt. Nach dem Justieren des Abstands der Auflagerplatten 17 von den Auflagerplatten 15 wird die zweite Verbundwandplatte 1 mit ihrer den Abstandspalt 7 begrenzenden Flachseite nach unten auf die nach oben stehenden Enden 27 der Gewindestangen 23 aufgefädelt und die Widerlagerplatten 29 mittels der Muttern 31 aufgeschraubt. Durch den Auflagedruck werden die Dorne 37 in die Verbundwandplatte 1 eingetrieben und damit die Auflagerplatten 17 dauerhaft befestigt. Sodann werden die Schubverblockungselemente 37 und die Anhebeelemente 41 eingebaut. Die Baueinheit ist damit für sich transportfähig und kann in vertikaler Lage auf dem Bauplatz aufgestellt werden. Nach dem Einbau der Gebäudetrennwand werden die Schubverblockungselemente 37, die Anhebeelemente 41 entfernt sowie die Widerlagerplatten 29 und die Gewindestangen 27 ausgebaut. Evtl. in den Verbundwandplatten 1 verbleibende Löcher dieser Elemente werden verschlossen.

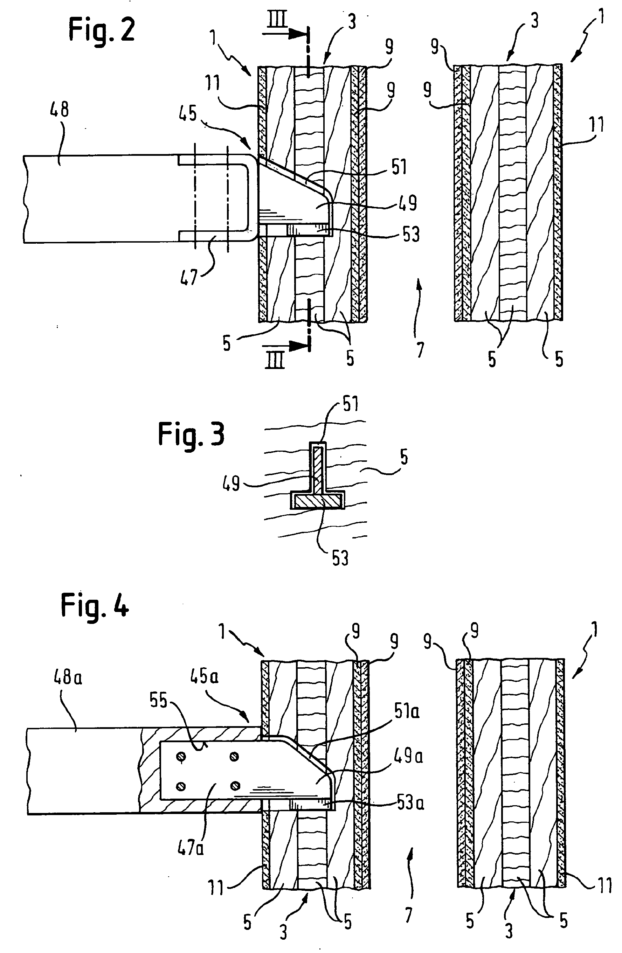

An die Verbundwandplatten 1 werden vielfach Deckenkonstruktionen quer zur Plattenebene angeschlossen. Fig. 2 zeigt bei einer bereits aufgestellten Gebäudetrennwand eine bevorzugte Ausgestaltung eines aus Metall bestehenden Deckenauflagers 45, welches mit einer Zange 47 eine Deckenplatte 49 bzw. einen Deckenbalken auf dessen Oberseite und Unterseite übergreift und dort befestigt ist. Von der Zange 47 greift ein in einer vertikalen Ebene verlaufendes plattenförmiges Auflagerschwert 49 in einen vertikalen Abschnitt eines der Kontur des Auflagerschwerts angepassten, in die Verbundwandplatte 1 von der dem Abstandschlitz 7 abgewandten Seite her eingefrästen Schlitz 51. Das Auflagerschwert 49 greift über die Mitte der Tragplatte 3 hinweg und trägt eine quer zum Auflagerschwert 49 sich erstreckende, symmetrisch zur Mittelebene der Tragplatte 3 ausladende, horizontale Auflagerplatte 53. Die Auflagerplatte 53 ist konturgleich von einem Querabschnitt des damit insgesamt T-förmigen Aufnahmeschlitzes 51 umschlossen.

Da das Deckenauflager 45 die Tragplatte 1 symmetrisch zu deren Mittelebene belastet, werden keine Biegemomente aus der Deckenkonstruktion in die Verbundwandplatte 1 eingeleitet. Der Schlitz 51 umschließt das Auflagerschwert 49 und die Auflagerplatte 53 eng passend und ist als Sackloch ausgebildet, was die Brandschutzeigenschaften verbessert.

Fig. 4 zeigt eine Variante des Deckenauflagers aus Fig. 2. Gleichwirkende Komponenten des Deckenauflagers sind mit den Bezugszahlen aus Fig. 2 bezeichnet und zur Unterscheidung mit dem Buchstaben a versehen. Das Deckenauflager der Fig. 4 unterscheidet sich von dem Deckenauflager der Fig. 2 im Wesentlichen nur dadurch, dass das Auflagerschwert 49a nicht an einer Zange gehalten, beispielsweise angeschweißt ist, sondern eine plattenförmige, vertikal verlaufende Verlängerung 47a bildet, die in einen vertikalen Schlitz 55 der Deckenplatte 49a bzw. des Deckenbalkens eingreift und dort beispielsweise mittels Bolzen oder dergleichen befestigt ist.

## Patentansprüche

1. Gebäudetrennwand in Holzbauweise, mit zwei im Abstand voneinander vertikal angeordneten Verbundwandplatten (1), von denen jede eine Tragplatte (3) aus Holz oder/und einem Holzwerkstoff umfasst und jede Tragplatte (3) auf ihrer zur anderen Tragplatte (3) gelegenen Flachseite mit einer Brandschutzplatte (9) aus feuerhemmendem oder nicht brennbarem Material flächig bekleidet ist,
**dadurch gekennzeichnet, dass** jede Tragplatte (1) als Schichtstapel aus mehreren jeweils flächig miteinander verklebten Schichten (5) ausgebildet ist, von denen wenigstens drei Schichten als Brettholzschicht oder/und Holzspanplatte ausgebildet sind.

2. Gebäudetrennwand in Holzbauweise nach Anspruch 1,
**dadurch gekennzeichnet, dass** die Tragplatte (1) ein Flächengewicht von wenigstens 38 kg/m², vorzugsweise wenigstens 45 kg/m², hat.

3. Gebäudetrennwand in Holzbauweise nach Anspruch 1 oder 2,
**dadurch gekennzeichnet, dass** wenigstens eine vorzugsweise mehrere, insbesondere wenigstens drei der Schichten (5) der Tragplatte (3) als Holzspanplatte mit gleichsinnig faserorientierten Holzspänen ausgebildet ist.

4. Gebäudetrennwand in Holzbauweise nach einem der Ansprüche 1 bis 3,
**dadurch gekennzeichnet, dass** wenigstens eine vorzugsweise mehrere, insbesondere fünf der Schichten (5) der Tragplatte (1) als Brettholzschicht mit in der Schicht gleichsinnig faserorientierten Holzbrettern ausgebildet ist.

5. Gebäudetrennwand in Holzbauweise nach Anspruch 3 oder 4,
**dadurch gekennzeichnet, dass** die Faserorientierung einer Teilanzahl von Schichten (5) der Tragplatte quer zur Faserorientierung der übrigen Schichten (5) der Tragplatte (1) verläuft.

6. Gebäudetrennwand in Holzbauweise nach einem der vorstehenden Ansprüche,
**dadurch gekennzeichnet, dass** die Schichten (5) der Tragplatte (3) unter Vakuum verklebt sind.

7. Gebäudetrennwand in Holzbauweise nach einem der vorstehenden Ansprüche,
**dadurch gekennzeichnet, dass** die Brandschutzplatte als Stapel aus wenigstens zwei Mineralwerkstoffplatten (9), insbesondere faserbewehrten Gipsplatten, ausgebildet ist.

8. Gebäudetrennwand in Holzbauweise nach einem der vorstehenden Ansprüche,
**dadurch gekennzeichnet**, zumindest eine der Tragplatten (3) auf ihrer der anderen Tragplatte (3) abgewandten Flachseite mit einer Sichtplatte (11), insbesondere einer Mineralwerkstoffplatte, vorzugsweise einer Gipsplatte, bekleidet ist,

9. Gebäudetrennwand in Holzbauweise nach einem der vorstehenden Ansprüche,
**dadurch gekennzeichnet, dass** die Tragplatten (3) einteilig über die gesamte Gebäudebreite oder/und die gesamte Gebäudehöhe erstrecken.

10. Gebäudetrennwand in Holzbauweise nach einem der vorstehenden Ansprüche,
**dadurch gekennzeichnet, dass** die Tragplatte (3) wenigstens eine von der zur anderen Tragplatte (3) abgewandten Flachseite her bis über die Plattenmitte hinaus in die Tragplatte (3) eingreifende Aussparung (51) hat, in der ein Deckenauflager (45) im Wesentlichen symmetrisch zur Plattenmitte abgestützt ist.

11. Gebäudetrennwand in Holzbauweise nach Anspruch 10,
**dadurch gekennzeichnet, dass** die Aussparung (51) als zur anderen Flachseite der Tragplatte (3) geschlossene Sackaussparung ausgebildet ist.

12. Gebäudetrennwand in Holzbauweise nach Anspruch 10 oder 11,
**dadurch gekennzeichnet, dass** das Deckenauflager (45) als vertikal verlaufendes, im Bereich seines in der Aussparung (51) gelegenen Endes mit einer horizontal verlaufenden Auflagerplatte (53) versehenes Auflagerschwert (49) ausgebildet ist.

13. Gebäudetrennwand in Holzbauweise nach Anspruch 12,
**dadurch gekennzeichnet, dass** die Aussparung (51) als T-förmiger Schlitz ausgebildet ist.

14. Gebäudetrennwand in Holzbauweise nach einem der Ansprüche 1 bis 13,
**dadurch gekennzeichnet, dass** die Verbundwandplatten (1) mit Hilfe temporär anbringbarer Befestigungsmittel (37, 41) oder/und temporär anbringbarer Abstandhalter (15, 17, 23, 29, 31) zu einer als solcher transportablen Baueinheit temporär vereinigt sind.

15. Gebäudetrennwand in Holzbauweise nach Anspruch 14,
**dadurch gekennzeichnet, dass** an den Verbundwandplatten (1) der Baueinheit, insbesondere an deren Rändern, die Verbundwandplatten (1) fest miteinander verbindende Schubverblockungselemente (37) abnehmbar befestigt sind.

16. Gebäudetrennwand in Holzbauweise nach Anspruch 14 oder 15,
**dadurch gekennzeichnet, dass** an den Verbundwandplatten (1) gemeinsame angreifende Anhebehalter (41) abnehmbar befestigt sind.

17. Gebäudetrennwand in Holzbauweise nach einem der Ansprüche 1 bis 16,
**dadurch gekennzeichnet, dass** die einander zugewandten Flachseiten der Verbundwandplatten (1) Auflagerplatten (15, 17) mit zueinander ausgerichteten Gewindelöchern (19, 21) zur temporären Aufnahme einer durch zumindest eine der Verbundwandplatten (1) hindurchtretenden Abstandhalter-Gewindestange (23) tragen.

18. Gebäudetrennwand in Holzbauweise nach Anspruch 17,
**dadurch gekennzeichnet, dass** das aus der Verbundwandplatte (1) austretende Ende (27) der Abstandhalter-Gewindestange (23) ein Widerlager (29, 31) aufgeschraubt ist.

19. Gebäudetrennwand in Holzbauweise nach Anspruch 18,
**dadurch gekennzeichnet, dass** die dem Widerlager (29, 31) gegenüberliegend an der von der Abstandhalter-Gewindestange (23) durchsetzten Verbundwandplatte (1) angeordnete Auflagerplatte (17) mit bei Auflagedruck selbstverbindenden Befestigungsmitteln, insbesondere wenigstens einem Einpressdorn (37) oder zeitverzögert abbindender Klebstoff an der Verbundwandplatte (1) befestigt ist.

20. Verfahren zum Aufstellen einer Gebäudetrennwand in Holzbauweise, welche zwei im Abstand voneinander angeordnete Verbundwandplatten (1) aufweist, von denen jede eine Tragplatte (3) aus Holz oder/und einem Holzwerkstoff umfasst und jede Tragplatte (3) auf ihrer zur anderen Tragplatte (3) gelegenen Flachseite mit einer Schutzplatte (9) aus feuerhemmendem Material flächig bekleidet ist,
**dadurch gekennzeichnet, dass** die Verbundwandplatten (1) mit einander zugewandten Schutzplatten (9) bei gleichzeitiger Abstützung über temporär anbringbare Abstandhalter (23) horizontal liegend übereinandergelegt und dann mit Hilfe temporär anbringbarer Befestigungsmittel (37, 41) zu einer als solcher transportablen Baueinheit temporär vereinigt werden,
dass die zur Baueinheit vereinigten Verbundwandplatten (1) am Gebäudeaufstellort vertikal stehend aufgestellt werden und dass dann die Abstandhalter (23) und Befestigungsmittel (37, 41) zumindest insoweit entfernt werden, als sie den Abstand zwischen den Verbundwandplatten (1) überbrücken.

21. Verfahren zum Aufstellen einer Gebäudetrennwand in Holzbauweise nach Anspruch 20,
**dadurch gekennzeichnet, dass** die Verbundwandplatten (1) Bestandteil einer Gebäudetrennwand gemäß einem der Ansprüche 1 bis 19 sind.

22. Verfahren zum Aufstellen einer Gebäudetrennwand in Holzbauweise nach Anspruch 20 oder 21,
**dadurch gekennzeichnet, dass** die Befestigungsmittel (37, 41) oder/und die Abstandhalter (23) gemäß den kennzeichnenden Merkmalen einem der Ansprüche 14 bis 19 ausgebildet sind.
